# FASCICULE DE BREVET EUROPEEN

(11) **EP 4 048 553 B1**
(45) Date de publication et mention de la délivrance du brevet: **13.09.2023**
(21) Numéro de dépôt: 20808179.4
(22) Date de dépôt: 22.10.2020
(51) Int. Cl.: B60Q 1/068, B60Q 1/076

(54) **DISPOSITIF DE SUPPORT POUR CORRECTEUR D'ASSIETTE DE PROJECTEUR DE VÉHICULE AUTOMOBILE**
HALTEVORRICHTUNG FÜR EINE LEUCHTWEITENREGULIERUNG EINES KRAFTFAHRZEUGSCHEINWERFERS
SUPPORT DEVICE FOR A LEVELLING DEVICE OF A MOTOR VEHICLE HEADLIGHT

(30) Priorité: 23.10.2019 FR 1911829
(43) Date de publication de la demande: 31.08.2022
(73) Titulaire: PSA Automobiles SA, 78300 Poissy (FR)
(72) Inventeur: VIDEIRA, Filipe, 78140 VELIZY VILLACOUBLAY (FR); ROYER, Guillaume, 91680 BRUYERES LE CHATEL (FR)
(86) Numéro de dépôt international: PCT/FR2020/051906
(87) Numéro de publication internationale: WO 2021/079067

(56) Documents cités:
- EP-A1- 2 208 639
- EP-A1- 2 213 513
- EP-A1- 2 383 146
- WO-A1-2018/190191
- DE-A1-102012 022 082
- FR-A1- 3 070 926

## Description

L'invention s'applique au pilotage des modules d'éclairage et de signalisation de véhicules automobiles.

L'invention s'applique au domaine du réglage des projecteurs des véhicules automobiles.

Plus particulièrement, l'invention concerne un dispositif de support des moyens de correction des faisceaux lumineux émis par les projecteurs destinés à effectuer des corrections d'assiette de ce faisceau afin de respecter les conditions d'éclairage réglementaires imposés pour ne pas éblouir les autres usagers de la route.

Traditionnellement, les moyens de réglage équipant les projecteurs de véhicules automobiles comprennent, d'une part, un organe mécanique pourvu d'une vis sans fin permettant de recentrer l'orientation nominale du faisceau lors d'un contrôle technique et, d'autre part, un moteur électrique assurant la correction de l'assiette du projecteur.

Ce moteur est généralement fixé à l'intérieur du boîtier de projecteur pour limiter le nombre de connecteurs dans l'environnement du véhicule dont les accès sont souvent très restreints.

Le moteur est monté sur un support relié au boîtier via une glissière tandis que la vis sans fin assurant le réglage mécanique du projecteur est montée entre le boîtier et le support et permet de déplacer l'ensemble support/moteur.

Toutefois, cette configuration impose de contraindre la vis sans fin pour éviter d'arc-bouter le support dans les glissières qui aurait pour conséquence de rendre le réglage difficile. Cette contrainte sur la vis conduit à ajouter plusieurs biellettes de renvoi d'angle en vue de déporter la zone de réglage dans une partie accessible du véhicule, mais ce déport augmente de manière préjudiciable l'encombrement global du projecteur.

Par ailleurs, les glissières présentent un jeu de montage qui génère des vibrations dans la liaison entre le support du moteur et le boîtier et, par voie de conséquence, des bruits parasites et des scintillements du faisceau lumineux.

En outre, le rattrapage possible de ces jeux par des contacts déformables suppose une mise au point complexe en raison de l'apparition de frottements et crée des difficultés d'actionnement de la vis de réglage.

On connaît par le document EP2213513 un dispositif de réglage de l'inclinaison d'un axe optique d'un dispositif d'éclairage pour véhicules.

Le brevet FR3022984B1 décrit un dispositif de réglage de l'inclinaison d'un réflecteur d'un module d'éclairage comprenant, d'une part, un bloc coulissant dans le boîtier pour le support de l'organe de fixation du réflecteur et, d'autre part, des moyens de réglage dynamique et des moyens de réglage statique de la position longitudinale de ce bloc de support aptes à assurer son déplacement en translation, respectivement, selon deux axes distincts et parallèles.

Cependant, ce dispositif n'apporte pas, ni ne suggère de solution au problème technique de l'arc-boutement d'un élément de support du réflecteur ou d'un moteur interne dans une glissière de liaison au boîtier.

Dans ce contexte, l'invention propose de résoudre les problèmes techniques mentionnés ci-dessus en s'affranchissant de la présence de biellettes et d'une glissière en la remplaçant par une zone déformable située entre la vis sans fin et le moteur interne de façon à éviter ainsi toute contrainte d'arc-boutement à la liaison du moteur avec le boîtier.

Ce but est atteint au moyen d'un dispositif de support selon les caractéristiques de la revendication 1.

Selon une caractéristique avantageuse, la première partie comprend une potence portant, d'une part, la tête de la vis sans fin et d'autre part, un organe de fixation au boîtier.

Selon une variante particulière, la potence se prolonge à son extrémité inférieure par une poutre sensiblement horizontale raccordée à l'entretoise et portant un organe complémentaire de fixation au boîtier.

Selon une variante préférentielle, l'entretoise comprend deux pattes verticales constituées chacune d'un raidisseur central et de deux lames flexibles d'extrémités basse et haute.

Selon encore une autre caractéristique, la seconde partie comprend un mandrin pourvu d'un orifice avant recevant l'arbre du moteur et d'un conduit arrière taraudé recevant la tige filetée de la vis sans fin.

De préférence, le conduit arrière du mandrin est déporté latéralement par rapport à l'orifice avant.

Selon une autre variante particulière, il est prévu que la seconde partie soit supportée par l'entretoise.

De préférence, la seconde partie comprend des moyens de suspension du moteur.

Un autre objet de l'invention est un véhicule automobile équipé d'un projecteur muni d'un dispositif de support des moyens de correction d'assiette présentant les caractéristiques définies ci-dessus.

Le dispositif de l'invention est particulièrement compact et permet ainsi de réduire l'encombrement du module de projecteur tout en offrant une plus grande liberté de positionnement et d'accès aux moyens de réglage et de correction d'assiette.

La structure de ce dispositif est simple car elle ne comporte qu'une seule pièce, les deux parties étant réalisées par co-moulage.

Le dispositif offre une plus grande fiabilité car il permet d'éviter les risques de blocage et d'arc-boutement dus aux frottements existant auparavant dans la liaison coulissante à glissières entre le support du moteur et le boîtier.

En outre, le dispositif de l'invention présente un intérêt économique car il permet de s'affranchir de l'utilisation de biellettes pour déporter l'accès à la vis de réglage.

L'ergonomie et la qualité du projecteur s'en trouvent ainsi améliorées de même que les opérations de d'assemblage et de maintenance qui sont aussi grandement facilitées.

D'autres caractéristiques et avantages de l'invention ressortiront à la lecture de la description qui va suivre, en référence aux figures annexées et détaillées ci-après.
[Fig. 1] est une vue en perspective d'un mode de réalisation du dispositif de support des moyens de correction d'assiette selon l'invention.
[Fig. 2] est une vue de côté du mode de réalisation de la figure 1 du dispositif de l'invention avec, en traits pleins, le moteur en position rétractée et, en traits pointillés, le moteur en position avancée.

Pour plus de clarté, les éléments identiques ou similaires sont repérés par des signes de référence identiques sur l'ensemble des figures.

Naturellement, les modes de mise en oeuvre de l'invention illustrés par les figures présentées ci-dessus et décrites ci-après, ne sont donnés qu'à titre d'exemples non limitatifs.

Le dispositif de l'invention est destiné au support des moyens de réglage d'un projecteur de véhicule automobile et, plus précisément, d'ajustement de l'orientation du faisceau lumineux émis par ce projecteur par le biais d'une correction de son assiette.

Ce réglage est généralement effectué au moyen d'un organe électrique constitué d'un moteur électrique déplacé par un organe mécanique constitué d'une vis sans fin solidaire du boîtier.

La vis sans fin assure le réglage mécanique en recentrant l'orientation nominale du faisceau, par exemple, lors d'un contrôle technique tandis que le moteur électrique assure un réglage électrique destiné à corriger l'assiette du projecteur.

La vis sans fin assurant le réglage mécanique est montée entre le boîtier et le support du moteur et permet de déplacer l'ensemble support/moteur qui est monté de façon mobile à l'intérieur du boîtier pour limiter le nombre de connecteurs dans l'environnement du véhicule dont les accès sont souvent très restreints.

Du fait des problèmes de friction et de coincement rencontrés par les dispositifs traditionnels lors du déplacement du moteur électrique par la vis sans fin, l'invention vise à modifier la structure du dispositif interne de support des moyens de réglage du projecteur.

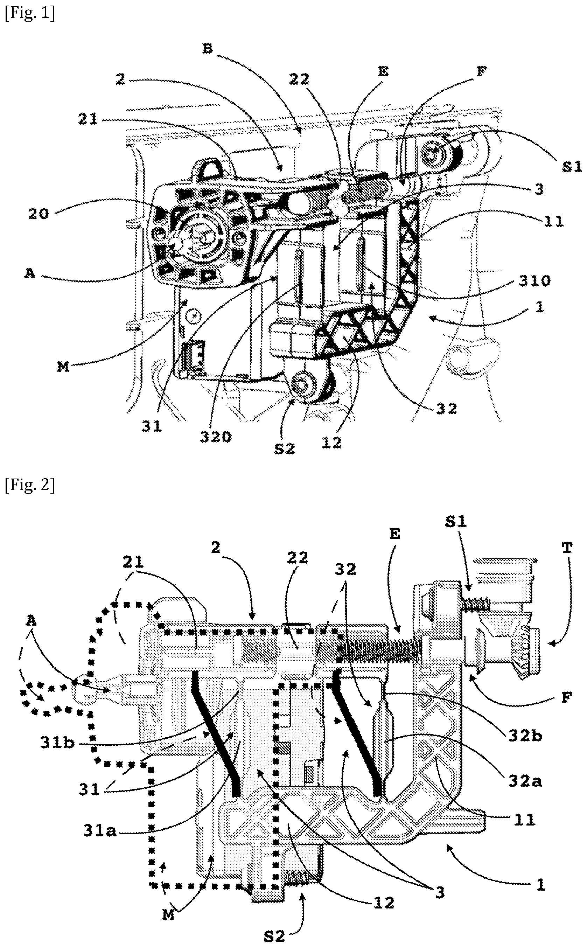

A cet effet et comme illustré par les figures 1 et 2, le dispositif de support de l'invention comprend une première partie 1 fixée sur le boîtier B et portant la vis sans fin F et une seconde partie 2 portant le moteur interne M. La seconde partie 2 est reliée à la première partie 1 par une entretoise 3 élastiquement déformable permettant le déplacement longitudinal du moteur M relativement au boîtier B sous l'action de la vis sans fin F.

La première partie 1 comprend une potence 11 portant, d'une part, la tête T de la vis sans fin F sur laquelle agit un outil de vissage (non représenté) utilisé par un opérateur et d'autre part, un organe de fixation au boîtier, ici sous forme d'une vis S1.

La potence 11 se prolonge à son extrémité inférieure par une poutre 12 sensiblement horizontale qui est raccordée à l'entretoise 3 et qui porte un organe complémentaire de fixation au boîtier constitué également ici sous forme d'une vis S2.

L'entretoise 3 comprend au moins une patte verticale et, dans le mode de réalisation représenté sur les figures, deux pattes 31, 32 identiques et parallèles se raccordant, par leur extrémité basse, à la première partie 1 portant la vis sans fin F et, par leur extrémité haute, à la seconde partie 2 portant le moteur M.

Chacune des pattes verticales 31, 32 est constituée d'un raidisseur central 31a, 32a et de deux lames flexibles 31b, 32b s'étendant entre le raidisseur 31a, 32a et leurs extrémités, respectivement, basse et haute. Le raidisseur 31a, 32a a ici une largeur identique aux lames 31b, 32b mais une épaisseur plus importante. Le raidisseur présente, en outre, une nervure axiale de renfort 310, 320 (figure 1).

La seconde partie 2 comprend, quant à elle, un mandrin 21 pourvu d'un orifice avant 20 recevant l'arbre A du moteur M et d'un conduit arrière taraudé 22 recevant la tige filetée E de la vis sans fin F.

La seconde partie 2 est supportée par les entretoises 3 qui sont suffisamment rigides dans la direction verticale grâce à la présence du raidisseur 31a, 32a. Ainsi, le moteur M peut être monté en suspension sur la seconde partie en étant retenu, notamment, par son arbre A logé au travers de l'orifice 20, comme illustré par la figure 2 et, le cas échéant, par des moyens complémentaires (non représentés).

De préférence, le conduit arrière 22 du mandrin 21 est déporté latéralement sur la seconde partie 2 par rapport à l'orifice avant 20 pour équilibrer les efforts de la vis sans fin F lors du réglage.

La rotation de la tête T de la vis sans fin F, dans un sens ou dans l'autre, entraîne le déplacement en translation de la tige filetée E dans le conduit 22 et, par poussée, déplace le mandrin 21 et l'arbre A du moteur M en avant, comme illustré par les traits pointillés et les flèches sur la figure 2, ou en arrière, comme illustré en traits pleins sur cette même figure.

Ce déplacement provoque conjointement la déformation élastique des pattes 31, 32 de l'entretoise 3 et, plus particulièrement, des lames 31b, 32b qui plient d'arrière en avant ou inversement, en suivant le déplacement de la seconde partie 2.

Dans cette phase, les raidisseurs 31a, 32a qui présentent une épaisseur plus importante de matière que les lames 31b, 32b et une nervure axiale de renfort 310, 320, ne subissent que peu ou pas de déformation ce qui assure le déplacement de l'arbre A selon un axe sensiblement longitudinal.

## Revendications

1. Dispositif de support comprenant un boîtier (B) et des moyens de correction de l'assiette d'un projecteur de véhicule automobile logés dans le boîtier (B), lesdits moyens de correction comprenant un moteur électrique interne (M), monté de façon mobile relativement au boîtier et pouvant être déplacé par une vis sans fin (F) solidaire dudit boîtier, **caractérisé en ce qu'**il comprend une première partie (1) fixée sur le boîtier (B) et portant la vis sans fin (F) et une seconde partie (2) portant le moteur interne (M) reliée à ladite première partie par une entretoise (3) élastiquement déformable permettant le déplacement longitudinal du moteur (M) dans le boîtier (B) sous l'action de la vis sans fin (F), et **en ce que** ladite entretoise (3) comprend au moins une patte verticale (31, 32), lorsque le dispositif est monté sur un véhicule, se raccordant, par son extrémité basse, à la première partie (1) portant la vis sans fin (F) et, par son extrémité haute, à la seconde partie (2) portant le moteur (M).

2. Dispositif de support selon la revendication 1, **caractérisé en ce que** ladite première partie (1) comprend une potence (11) portant, d'une part, la tête (T) de la vis sans fin (F) et d'autre part, un organe de fixation (S1) au boîtier (B).

3. Dispositif de support selon la revendication précédente, **caractérisé en ce que** la potence (11) se prolonge à son extrémité inférieure par une poutre (12) sensiblement horizontale raccordée à ladite entretoise (3) et portant un organe complémentaire (S2) de fixation au boîtier (B).

4. Dispositif de support selon l'une des revendications précédentes, **caractérisé en ce que** ladite entretoise (3) comprend deux pattes verticales (31, 32) constituées chacune d'un raidisseur central (31a, 32a) et de deux lames flexibles (31b, 32b) d'extrémités basse et haute.

5. Dispositif de support selon l'une des revendications précédentes, **caractérisé en ce que** ladite seconde partie (2) comprend un mandrin (21) pourvu d'un orifice avant (20) recevant l'arbre (A) du moteur (M) et d'un conduit arrière (22) taraudé recevant la tige filetée (E) de la vis sans fin (F).

6. Dispositif de support selon la revendication précédente, **caractérisé en ce que** le conduit arrière (22) du mandrin (21) est déporté latéralement par rapport à l'orifice avant (20).

7. Dispositif de support selon l'une des revendications précédentes, **caractérisé en ce que** ladite seconde partie (2) est supportée par ladite entretoise (3).

8. Dispositif de support selon l'une des revendications précédentes, **caractérisé en ce que** ladite seconde partie (2) comprend des moyens de suspension du moteur (M).

9. Véhicule automobile équipé d'un projecteur muni d'un dispositif de support selon l'une des revendications précédentes.

## Patentansprüche

1. Trägervorrichtung mit einem Gehäuse (B) und im Gehäuse (B) untergebrachten Mitteln zur Korrektur der Trimmung eines Kraftfahrzeugscheinwerfers, wobei die Korrekturmittel einen internen Elektromotor (M) umfassen, der relativ zum Gehäuse beweglich gelagert ist und durch eine mit dem Gehäuse fest verbundene Endlosschnecke (F) bewegt werden kann, **dadurch gekennzeichnet, dass** es einen ersten Teil (1), der am Gehäuse (B) befestigt ist und die Endlosschnecke (F) trägt, und einen zweiten Teil (2) umfasst. Tragen des internen Motors (M), der mit dem ersten Teil über einen elastisch verformbaren Abstandshalter (3) verbunden ist, der die Längsverschiebung des Motors (M) im Gehäuse (B) unter der Wirkung der endlosen Schraube (F) ermöglicht; und dass der Abstandshalter (3) mindestens einen vertikalen Schenkel (31, 32) umfasst, wenn die Vorrichtung an einem Fahrzeug montiert ist, der mit seinem unteren Ende mit dem ersten Teil (1) verbunden ist, der die Endlosschraube (F) trägt, und über sein oberes Ende mit dem zweiten Teil (2), der den Motor (M) trägt.

2. Stützvorrichtung nach Anspruch 1, **dadurch gekennzeichnet, dass** der erste Teil (1) einen Bügel (11) aufweist, der einerseits den Kopf (T) der Endlosschraube (F) und andererseits eine trägt Befestigungselement (S1) am Gehäuse (B).

3. Stützvorrichtung nach dem vorhergehenden Anspruch, **dadurch gekennzeichnet, dass** die Halterung (11) an ihrem unteren Ende durch einen im Wesentlichen horizontalen Balken (12) verlängert ist, der mit dem Abstandshalter (3) verbunden ist und ein komplementäres Element (S2) zur Befestigung daran trägt die Kiste (B).

4. Stützvorrichtung nach einem der vorhergehenden Ansprüche, **dadurch gekennzeichnet, dass** der Abstandshalter (3) zwei vertikale Schenkel (31, 32) umfasst, die jeweils aus einer zentralen Versteifung (31a, 32a) und zwei flexiblen Lamellen (31b, 32b) bestehen niedrige und hohe Enden.

5. Stützvorrichtung nach einem der vorhergehenden Ansprüche, **dadurch gekennzeichnet, dass** der zweite Teil (2) einen Dorn (21) umfasst, der mit einer vorderen Öffnung (20) zur Aufnahme der Welle (A) des Motors (M) und einem Gewinde versehen ist hinterer Kanal (22), der die Gewindestange (E) der Endlosschraube (F) aufnimmt.

6. Stützvorrichtung nach dem vorhergehenden Anspruch, **dadurch gekennzeichnet, dass** der hintere Kanal (22) des Dorns (21) gegenüber der vorderen Öffnung (20) seitlich versetzt ist.

7. Stützvorrichtung nach einem der vorhergehenden Ansprüche, **dadurch gekennzeichnet, dass** der zweite Teil (2) durch den Abstandshalter (3) getragen wird.

8. Stützvorrichtung nach einem der vorhergehenden Ansprüche, **dadurch gekennzeichnet, dass** der zweite Teil (2) motorische Aufhängungsmittel (M) umfasst.

9. Kraftfahrzeug, ausgestattet mit einem Scheinwerfer, der mit einer Stützvorrichtung nach einem der vorhergehenden Ansprüche versehen ist.

## Claims

1. Support device comprising a housing (B) and means for correcting the trim of a motor vehicle headlamp housed in the housing (B), said correction means comprising an internal electric motor (M), mounted in a movable manner relative to the casing and able to be moved by an endless screw (F) integral with said casing, **characterized in that** it comprises a first part (1) fixed to the casing (B) and carrying the endless screw (F) and a second part (2) carrying the internal motor (M) connected to said first part by an elastically deformable spacer (3) allowing the longitudinal displacement of the motor (M) in the casing (B) under the action of the screw without end (F); and **in that** said spacer (3) comprises at least one vertical leg (31, 32) when the device is mounted on a vehicle, being connected, by its lower end, to the first part (1) carrying the endless screw ( F) and, via its upper end, to the second part (2) carrying the motor (M).

2. Support device according to claim 1, **characterized in that** said first part (1) comprises a bracket (11) carrying, on the one hand, the head (T) of the endless screw (F) and on the other hand, a fixing member (S1) to the housing (B).

3. Support device according to the preceding claim, **characterized in that** the bracket (11) is extended at its lower end by a substantially horizontal beam (12) connected to said spacer (3) and carrying a complementary member (S2) for fixing to the box (B).

4. Support device according to one of the preceding claims, **characterized in that** said spacer (3) comprises two vertical legs (31, 32) each consisting of a central stiffener (31a, 32a) and two flexible blades (31b , 32b) of low and high ends.

5. Support device according to one of the preceding claims, **characterized in that** said second part (2) comprises a mandrel (21) provided with a front orifice (20) receiving the shaft (A) of the motor (M) and a threaded rear duct (22) receiving the threaded rod (E) of the endless screw (F).

6. Support device according to the preceding claim, **characterized in that** the rear duct (22) of the mandrel (21) is offset laterally with respect to the front orifice (20).

7. Support device according to one of the preceding claims, **characterized in that** said second part (2) is supported by said spacer (3).

8. Support device according to one of the preceding claims, **characterized in that** said second part (2) comprises motor suspension means (M).

9. Motor vehicle equipped with a headlamp provided with a support device according to one of the preceding claims.
